(19) Europäisches Patentamt

European Patent Office

Office européen des brevets

(11) Publication number: **0 279 153 B1**

## EUROPEAN PATENT SPECIFICATION

(45) Date of publication of patent specification: **30.03.94**  (51) Int. Cl.⁵: **C08F 10/00**, C08F 4/60

(21) Application number: **87870130.9**

(22) Date of filing: **21.09.87**

(54) Process for increasing the efficiency of a pre-polymerized catalyst.

(30) Priority: **02.02.87 US 9711**
　　　　　**02.02.87 US 9712**

(43) Date of publication of application:
**24.08.88 Bulletin 88/34**

(45) Publication of the grant of the patent:
**30.03.94 Bulletin 94/13**

(84) Designated Contracting States:
**AT BE CH DE ES FR GB IT LI NL SE**

(56) References cited:
**DE-A- 2 739 608**
**FR-A- 2 541 683**
**US-A- 4 200 717**
**US-A- 4 316 966**

(73) Proprietor: **FINA TECHNOLOGY, INC.**
**100 West 10th Street**
**Wilmington Delaware(US)**

(72) Inventor: **Ewen, John A.**
**16615 Kentwood Avenue**
**Houston Texas 77058(US)**
Inventor: **Bitzer, Alan H.**
**15726 Lake Lodge Drive**
**Houston Texas 77062(US)**
Inventor: **Gressett, David L.**
**402 McConnico**
**Galena Park Texas 77547(US)**
Inventor: **Hummel, Herbert G.**
**3717 Meadowlake**
**Pasadena Texas 77503(US)**

(74) Representative: **Detrait, Jean-Claude**
**c/o Fina Research S.A.**
**Patent Department**
**Zone Industrielle C**
**B-7181 Feluy (BE)**

**Description**

**TECHNICAL FIELD**

This invention relates to a process for increasing the efficiency of a catalyst used in the polymerization of olefins. In one aspect, a prepolymerized catalyst is contacted with a cocatalyst prior to the introduction of the catalyst into a polymerization reaction zone. The catalyst can also be contacted with an electron donor compound simultaneously with or after the contact of the catalyst with the cocatalyst and prior to the introduction into the reaction zone. In another aspect the invention relates to methods of pretreating a catalyst under pre-polymerization conditions over a relatively short and closely controlled residence time in an elongated tubular reactor prior to introduction of the catalyst into the polymerization reaction zone.

**BACKGROUND**

Catalysts for the polymerization of olefins are well known in the art and have been known at least since U. S. Patent No. 3,113,115, which described the basic Ziegler catalyst. Since that time, scores of patents have issued relating to new or improved Ziegler-type catalysts. Examples of these patents include U.S. Patent Nos. 3,113,115; 3,793,295; 3,950,842; 4,107,413; 4,294,721; 4,187,196; 4,226,741; 4,390,454; 4,495,338; 4,439,540; and 4,547,476.

These patents disclose Ziegler-type catalysts that are basically a complex derived from a halide of a transition metal, for example, titanium, vanadium, chromium, and zirconium and a metal hydride or a metal alkyl, typically an organoaluminum compound which serves as a cocatalyst. Usually, the catalyst includes a titanium halide compound which is supported on a magnesium halide complexed with an alkyl aluminum. Also employed with Ziegler-type catalysts are electron donors or Lewis bases which aid in controlling the sterospecificity of the polymer. Numerous electron donor (ED) compounds are known in the art and include ethers, esters, and polysilanes or siloxanes.

It has also become known in the art that the efficiency of these types of catalysts may be increased by pre-coating them with a polymeric substance in a pre-polymerization step prior to introducing the catalyst into a polymerization reaction zone. The pre-polymerization typically takes place in an initial, relatively small reactor prior to introduction of the catalyst into the main polymerization reactor. For example, U.S. Patent No. 4,316,966 to Mineshima et al discloses a process in which a Ziegler-type catalyst is pre-polymerized in an initial separate reaction zone with ethylene, propylene or another alpha-olefin depending upon the desired polymer product. The product contained in the pre-polymerization step is recovered from the initial reaction zone and used in subsequent reaction zones. Other procedures for pretreating Ziegler-type catalysts under pre-polymerization conditions are disclosed in U.S. Patents Nos. 3,893,989, 4,200,717 and 4,287,328 and in British Patent Specification 1,580,635.

The pre-polymerization step conducted in accordance with the prior art teachings proceeds at a slow pace. A common expedient is to pre-polymerize the catalyst in a batch-type operation in which the reaction zone is charged with the components of the catalyst system and the propylene or other olefin monomer is then added over a number of hours while the mixture is agitated. An alternative procedure as disclosed in the aforementioned patent No. 4,316,966 Mineshima et al is to carry out the pre-polymerization reaction continuously and couple it with the subsequent polymerization steps. Here, the residence time of the catalyst system in the pre-polymerization reactor, while sometimes shorter than as in the case of the batch-type operation, is still a relatively long one.

**BRIEF SUMMARY OF THE INVENTION**

In accordance with one aspect of this invention, it has been surprisingly found that the efficiency of these pre-polymerized catalysts can be increased even further by contacting the pre-polymerized catalyst with a cocatalyst or a mixture of cocataylst and electron donor prior to the catalyst entering the reaction zone as taught by the present invention. Increases in efficiency of almost 10,000 (gms product/gm catalyst for 2 hours) have been achieved, and further increases are possible.

In accordance with a second aspect of this invention, it has been unexpectedly found that these catalysts can be pre-polymerized in a surprisingly new process. This process entails pretreating the catalyst under pre-polymerization conditions over a relatively short and closely controlled residence time in an elongated tubular reactor that feeds to the polymerization reaction zone.

## DISCLOSURE OF THE INVENTION

The first aspect of the present invention provides a process for increasing the efficiency of pre-polymerized Ziegler-type catalysts that are used in the polymerization of olefins, particularly propylene. In one embodiment, the invention comprises contacting a pre-polymerized catalyst with a cocatalyst and introducing the catalyst into a polymerization reaction zone which contains a monomer solution. A preferred embodiment includes contacting the pre-polymerized catalyst with a stream of cocatalyst and using the stream to carry the catalyst into the reaction zone.

In another embodiment, this aspect of the invention comprises contacting the pre-polymerized catalyst with the cocatalyst and an electron donor compound. The electron donor compound can be mixed with the cocatalyst or added after the catalyst has contacted the cocatalyst. The catalyst is then introduced into the reaction zone. It is preferred to have a mixed stream of cocatalyst and electron donor contact the catalyst as the stream carries the catalyst into the reaction zone. Alternatively, the catalyst may first contact a stream of cocatalyst and then a stream of electron donor compound.

In another embodiment of this aspect of the invention, a catalyst is pre-polymerized by contacting the catalyst with a cocatalyst, and electron donor and a monomer. The catalyst is washed with an organic solvent such as hexane or heptane. The catalyst is then contacted again with a cocatalyst prior to introducing the catalyst into the reaction zone. Additionally, the catalyst can be contacted with an electron donor simultaneously with or after contact with the cocatalyst but prior to the introduction of the catalyst into the reaction zone.

Test results show an increase in efficiency of the pre-polymerized catalyst of up to 10,000 (gms polymer product/gm catalyst in two hours) or more when it is contacted with the cocatalyst and electron donor as taught by the present invention as opposed to adding the pre-polymerized catalyst directly to the reaction zone as taught by the prior art. Similar results are obtained when the catalyst is contacted only with the cocatalyst without the presence of the electron donor.

In the pre-polymerization step, the catalyst can be coated with a polymer product such that the weight ratio of polymer/catalyst is approximately 0.1-100. Preferably, the ratio of coating to catalyst is less than 10. The preferred monomer is propylene.

In accordance with a second aspect of the present invention there is provided a new and improved process for the supply of a pre-polymerized Ziegler-type catalyst system to an olefin polymerization reactor. The invention provides for a residence time in the pre-polymerization reactor which is much shorter than that encountered in prior art procedures. In carrying out the invention, a fluid carrier stream containing a Ziegler-type catalyst system is established. Thereafter olefin monomer is added to the carrier stream and the stream containing the catalyst system and the monomer is flowed through an elongated tubular reactor. The stream is passed through the tubular reactor at a flow rate sufficient to provide a residence time in the reactor of less than one minute. The tubular reactor is operated at temperature and conditions sufficient to precoat the catalyst by polymerization of the monomer without such polymerization as would, given the residence time within the reactor, plug the reactor. The output from the tubular pre-polymerization reactor is then supplied to the main polymerization reactor.

In this aspect of the invention, the Ziegler-type catalyst system preferably contains a cocatalyst and optionally an electron donor.

A preferred application of this second aspect of the invention is in the pre-polymerization of the catalyst with propylene monomer in connection with the manufacture of polypropylene, either as a homopolymer or as a copolymer such as propylene copolymerized with ethylene. Preferably, the residence time of the carrier fluid within the tubular reactor after addition of the propylene monomer is no more than 10 seconds. The tubular reactor is operated at a temperature of about 30°C or less. In yet a further embodiment of this aspect of the invention, the tubular reactor has an internal diameter of 1 cm or less and the residence time within the reactor subsequent to the addition of propylene monomer is no more than 2 seconds. In short, it is preferred that the catalyst be essentially pre-polymerized just prior to being introduced into the polymerization reactor.

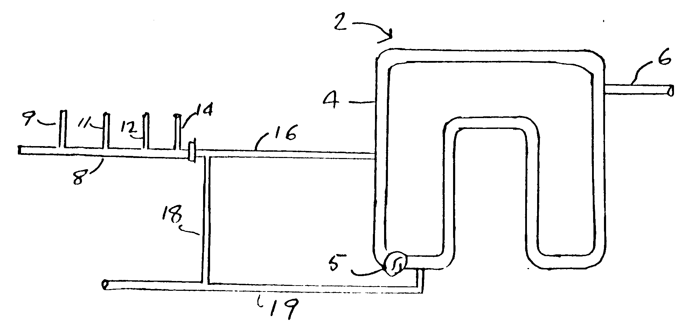

## BRIEF SUMMARY OF THE DRAWING

The Drawing is a schematic illustration of the invention as used in supplying a pre-polymerized catalyst system to a continuous flow reactor used for the polymerization of propylene in the liquid phase.

3

## DETAILED DESCRIPTION

The type of catalyst contemplated for use in the present invention is generally a Ziegler-type catalyst. As disclosed in the aforementioned prior art patents, Ziegler-type catalyst systems typically involve the basic Ziegler catalyst component, a cocatalyst, and an electron donor or ED compound, and the invention will be described in reference to such catalyst systems. Examples of Ziegler catalyst systems used in the polymerization of polypropylene are described in Kirk-Othmer, Encyclopedia of Chemical Technology, Third Edition, John Wiley & Sons 1981, Vol. 16, pp. 453-469 in the section entitled "Polypropylene". For a further description of such catalysts and the pre-polymerization thereof, reference is made to the entire disclosures of the aforementioned U.S. Patent Nos. 3,893,989, 4,287,328, and 4,316,966 and British Patent Specification 1,580,635.

These catalysts can be generally defined as a complex derived from a transition metal halide and a metal hydride or a metal alkyl. As disclosed, for example, in the aforementioned Kirk-Othmer article, the base catalyst component is typically a titanium chloride, preferably a titanium tetrachloride, although in some cases a titanium trichloride or a titanium dialkylchloride may be employed. The titanium chloride is normally supported on magnesium chloride, magnesium hydroxide, organo magnesium compounds, alumina or silica. The most commonly employed catalyst support is magnesium dichloride.

The second Ziegler catalyst component is a cocatalyst normally based upon aluminum, as described previously and is utilized to aid in the activation of the catalyst for the polymerization reaction. The most commonly used cocatalyst is an organoalumium compound or alkylaluminum such as a trialkylaluminum, a trialkyloxyaluminum or an alkylaluminum dihalide or a dialkylaluminum halide in which the halogen component is provided by chlorine, bromine or iodine. A preferred cocatalyst for the production of polypropylene of high isotactic index is triethylaluminum, commonly referred to as "TEAL".

The Lewis base or electron donor (ED) compound is employed to increase the stereospecificity of the catalyst and in some cases results in an increase in catalyst activity. Examples of useful electron donors include amines, amides, ethers, ketones, nitriles, phosphines, stibines, arsines, phosphoramides, thioethers, thioesters, aldehydes, alcoholates, amides and salts of organic acids. Some examples of preferred electron donors which are effective stereoregulators or stereospecifiers include the esters of carboxylic, alkoxy or amino acids, and the esters of aromatic acids. Preferred electron donors are organic silicon compounds, for example, diphenyl dimethoxy silane (DPMS). DPMS acts to facilitate the production of stereoregular highly isotactic polypropylene.

As noted previously, the precoating of pre-polymerization of an olefin polymerization catalyst is an important step in the polymer production process. The precoating step preserves the morphology of the catalyst as it is supplied to the polymerization reactor. Disintegration of the catalyst, which might otherwise occur, is retarded, thereby decreasing the bulk density of the polymer product within the main reactor and reducing the amount of polymer fines. This is of a particular concern in the case of highly active or fragile catalysts which are subject to disintegration. Pre-polymerization of the catalyst also increases catalyst activity and provides for better isotactic control of the polymer product and results in a product of increased bulk density.

The operation of the various aspects of the invention will be described with reference to a specific titanium chloride, TEAL, DPMS system for the purpose of simplicity. However, those skilled in the art will recognize that the following description is also applicable to other Zeigler-type catalyst systems.

### I. Contacting pre-polymerized catalyst with cocatalyst

In the first aspect of this invention, the catalyst can be pre-polymerized using any of the several methods known and used in the industry. In this first aspect the pre-polymerization reaction preferably occurs as a monomer is introduced into a mixture of catalyst, cocatalyst and electron donor. The monomer is polymerized, and in so doing, it adheres to the surface of the catalyst and forms a coating.

In pre-polymerizing the catalyst, a weight ratio of polymer/catalyst of approximately 0.1-100 is desirable. Preferably, the weight ratio of polymer to catalyst is less than 10. A higher weight ratio results in a greater volume occupied by the pre-polymerized catalyst. A ratio of polymer coating less than 2 still provides acceptable increases in the efficiency of the catalyst, but the bulk density of the polymer product is reduced. Therefore, the preferred range of polymer coating to catalyst is 2-10. As an optional step, the pre-polymerized catalyst may be washed with an organic solvent such as hexane or heptane to remove excess cocatalyst and enable the catalyst to be placed in drums in a slurry form for storage and transport.

According to one embodiment of this first aspect of the invention, the pre-polymerized catalyst is contacted with a cocatalyst and then is introduced into a polymerization reaction zone which contains a monomer solution, and, optionally, a cocatalyst and an electron donor compound. Typically, these will be the same compounds as were used in the pre-polymerization step. In a preferred embodiment, the contact of the catalyst with the cocatalyst occurs as the catalyst is fed into a diluted stream of cocatalyst which stream carries the catalyst into the reaction zone. The catalyst may be fed into the stream of cocatalyst in a continuous or periodic manner. The contact can take place in a pipe which carries the cocatalyst as there is no need for a mixing chamber. The contact time or residence time of the catalyst in the pipe need be only a few seconds. Two seconds of pre-contact between the pre-polymerized catalyst and the cocatalyst is sufficient to significantly increase the efficiency of the catalyst. The concentration of cocatalyst in the stream may be varied as the cocatalyst is diluted and flushed with hexane, heptane or a similar organic solvent. A preferred concentration would be 10-30% cocatalyst. Lower concentrations may be used as even a small amount of cocatalyst contacted a second time with the catalyst will increase the efficiency of the catalyst. Higher concentrations may also be used as, to a point, the more cocatalyst that is contacted with the catalyst before entering the reaction zone, the greater the efficiency. All of the cocatalyst necessary for the polymerization reaction in the reaction zone need not be fed through this contact pipe. A portion of the desired amount of cocatalyst in the reactor may be added directly to the reaction zone.

Another embodiment of this first aspect of the invention provides for the pre-polymerized catalyst to be contacted with a cocatalyst and an electron donor before entering the reaction zone. The electron donor may be contacted with the catalyst simultaneously with the cocatalyst or following the contact with the cocatalyst. Most electron donors require that the cocatalyst contact the catalyst before or simultaneously with the electron donor as the electron donor may poison the catalyst in the absence of cocatalyst. In a preferred embodiment, the catalyst is fed into a stream containing diluted cocatalyst and electron donor compounds, and the stream acts to carry the catalyst into the reaction zone. In the alternative, the catalyst may be fed into a stream of dilute electron donor prior to entering the reaction zone.

## Experimental I

The following Examples and Comparative Examples illustrate this first aspect of the present invention in more detail. These examples also illustrate the advantages to be gained in increased catalyst efficiency as compared with introducing a pre-polymerized catalyst into a reaction zone without pre-contacting with a cocatalyst and an electron donor. The results are summarized in Table-1.

### Example 1

### Pre-polymerizing the catalyst

A Ziegler-type catalyst comprising titanium on a magnesium chloride support that contains 16.0% by weight of Mg was pre-polymerized with propylene. The reaction took place in a vessel equipped with a stirrer to which hexane, TEAL and DPMS were added. The catalyst was added, and the mixture was agitated for a time sufficient to insure adequate contact between the catalyst, cocatalyst and electron donor. Propylene was gradually added to the vessel with agitation. Enough propylene was added so as to polymerize and coat the catalyst such that the weight ratio of the polymer coating/catalyst was in the range of 2-4. At the conclusion of propylene addition, the mixture was agitated for an additional period of time and then allowed to settle. The coated catalyst was separated from the unreacted material, inert solvent and other impurities using conventional solid-liquid separation techniques. As an optional step, the catalyst was washed with hexane or heptane in order to remove excess TEAL, and the catalyst was then slurried with hexane and placed into drums for storage and transport.

### Pre-contacting and Polymerization Procedure

The pre-polymerized catalyst was first diluted in a mineral oil slurry. Approximately 1 ml of the catalyst slurry was diluted in mineral oil to 5 ml total volume in a "Vacuum Atmospheres" inert gas glove box. Typically, about 2.5-3.0 ml of the dilute slurry, or approximately 6 mg of raw catalyst, was injected in each polymerization run. The actual amount of catalyst used in the polymerization reaction was determined by analysis of the polymer product for ppm $mg^{+2}$ and by knowing the weight percentage of the Mg in the catalyst.

A two liter Zipperclave containing approximately 2 psig of nitrogen at 30°C was used as a reaction vessel to which 1 mmol of TEAL, or half of the total mmols of TEAL for the run, was added. Approximately 65 ml of hydrogen gas was then added followed by 1,000 ml of propylene. The stirrer was set at 1200 rpm,

EP 0 279 153 B1

and the reactor temperature was raised to 70 °C and the mixture was agitated for about an hour.

In a glove box under nitrogen purge, the remaining 1 mmol of TEAL of the 2 total mmols used and 0.1 mmol of DPMS, was added by syringe to a 75 ml sample cylinder containing 5 ml hexane. The sample cylinder was then taken into the inert gas glove box where approximately 3 ml of the catalyst/oil slurry was injected by syringe into the sample cylinder. The contents of the sample cylinder were then flushed to the Zipperclave reactor with 200 ml of propylene. The polymerization reaction continued for 2 hours after the addition of the catalyst at which point it was stopped. The polymer product was then collected and dried. The dried polymer was weighed to determine the yield. The isotactic indeces (II) were measured as the weight percent of the polymer insoluble in boiling heptane. The melt flow indeces (MI) were determined using the standard ASTM Method D 1238-82 for polypropylene (gms/10 minutes). The ppm of Mg was determined by atomic absorption. The efficiency of the catalyst in terms of gms of polymer/gm of catalyst in two hours was then calculated form the ppm of Mg and the reported weight percentage of Mg in the catalyst (16 wt %).

The efficiency of the catalyst obtained through using the above procedures was calculated to be 28,600 gms of polypropylene/gm of catalyst for 2 hours reaction time. The results are shown in Table 1.

**Comparative Example 1**

The procedure was the same as in Example 1 except that there was no pre-contact of the pre-polymerized catalyst with the TEAL and DPMS. The 1.0 mmol TEAL and 0.1 mmol DPMS contacted in the sample chamber was flushed to the reactor with 200 ml of propylene which was followed immediately by the 3 ml of diluted catalyst. The efficiency of the catalyst without the pre-contacting was 21,900.

**Example 2**

The procedure of Example 1 were followed except that all of the TEAL used in the reaction, 2 mmols, was added to the sample chamber instead of half to the reactor and half to the sample chamber. The TEAL, DPMS and hexane were contacted for 10 minutes in the sample chamber before addition of the catalyst. The catalyst was added and 5 minutes later the contents of the sample chamber were flushed to the reactor with 200 ml of propylene. The efficiency was calculated to be 25,000.

**Example 3**

The procedures of Example 1 were repeated. The efficiency was calculated to be 29,600.

**Example 4**

The procedures of Example 1 were repeated except that 2.7 ml of catalyst slurry was injected into the sample chamber and was pre-contacted for about 5 minutes before being charged to the reactor. The calculated efficiency was 27,600.

**Example 5**

The procedures of Example 1 were repeated except that the total amount of TEAL used was 1.2 mmol and the total amount of DPMS used was 0.062 mmol. One-half of the total TEAL and DPMS used was added to the reactor at 30 °C. The other one-half of the TEAL and DPMS was pre-contacted with he catalyst in the sample cylinder and then charged to the reactor. The amount of catalyst slurry used was 2.5 ml. The calculated catalyst efficiency was 29,600.

**Comparative Example 5**

The procedures of Example 5 were followed except that all of the TEAL and DPMS was added to the reactor at 30 °C and there was no pre-contact with the catalyst. The efficiency was calculated to be 20,600.

**Example 6**

The procedures of Example 5 were followed except for the total amount of TEAL used was 0.2 mmol and the total amount of DPMS was 0.01 mmol. The calculated efficiency was 14,000.

6

## Comparative Example 6

The procedures of Example 6 were followed except that all of the TEAL and DPMS was charged to the reactor at 30°C with no pre-contact with the catalyst. The calculated efficiency of the catalyst was 8,500.

## Example 7

The procedures of Example 5 were repeated except for the total amount of TEAL used was 1.0 mmol and the total amount of DPMS was 0.1 mmol. The Al/DPMS ratio was 10. The resulting efficiency of the catalyst was calculated to be 26,200.

## Comparative Example 7

The procedures of Example 7 were repeated except that all of the TEAL and DPMS was charged to the reactor at 30°C and there was no pre-contact with the catalyst. The efficiency was calculated to be 19,800.

## Example 8

The procedures of Example 5 were repeated except that the total amount of TEAL used was 0.62 mmol and the total amount of DPMS used was 0.062. Also, 2.7 ml of catalyst slurry was used. The calculated efficiency was 26,700.

## Comparative Example 8

The procedures and amounts of Example 8 were used except that all of the TEAL and DPMS was charged to the reactor at 30°C with there being no pre-contact with the catalyst. The catalyst efficiency was calculated to be 18,000.

## Example 9

The procedures of Example 5 were repeated except that the total amount of TEAL used was 0.4 mmol and the total amount of DPMS used 0.062 mmol. The TEAL/DPMS ratio was 6.45. The calculated efficiency was 22,500.

## Comparative Example 9

The same procedures and amounts as used in Example 9 were repeated except there was no pre-contact with the catalyst as all the TEAL and DPMS was added to the reactor at 30°C. The efficiency was calculated to be 18,000.

## Example 10

The procedures of Example 5 were repeated except that the total amount of TEAL used was 2.0 mmol and the total amount of DPMS used was 1.67 mmol. The TEAL/DPMS ratio was 1.2. The efficiency was calculated to be 24,600.

## Comparative Example 10

The procedures of Example 10 were followed except that there was no pre-contact with the catalyst as all the TEAL and DPMS was added to the reactor at 30°C. The efficiency was 16,700.

## Example 11

The procedures of Example 5 were followed except that the total amount of TEAL used was 0.6 mmol and the total amount of DPMS used was 0.5 mmol. The amount of catalyst slurry used was 2.7 ml. The resultant efficiency was calculated to be 24,200.

**Comparative Example 11**

The procedures of Example 11 were followed except that there was no pre-contact of the catalyst as all of the TEAL and DPMS was added to the reactor at 30°C. The efficiency was found to be 15,500.

**Example 12**

The procedures of Example 5 were followed except that the total amount of TEAL used was 0.4 mmol and the total amount of DPMS used was 0.33. The calculated efficiency was 18,000.

**Comparative Example 12**

The procedures of Example 12 were repeated except that there was no pre-contact with the catalyst as all the TEAL and DPMS was added to the reactor at 30°C. The efficiency was reported to be 12,700.

**Example 13**

The procedures of Example 5 were followed except that the total amount of TEAL used was 0.2 mmol and the total amount of DPMS used was 0.17 mmol. The efficiency was found to be only 3,700.

**Comparative Example 13**

The procedures of Example 13 were followed except that there was no pre-contact with the catalyst as all the TEAL and DPMS was added to the reactor at 30°C. The efficiency was calculated to be 3,600.

TABLE 1

| Examples | TEAL (mmol) | DPMS (mmol) | TEAL/ DPMS | Yield of Polymer (gms) | Mg ppm | Efficiency gms/gm-2 hr | Isotactic Index (wt%) | Melt Index g/ |
|---|---|---|---|---|---|---|---|---|
| 1 | 2.00 | 0.1 | 20 | 234 | 5.6 | 28,600 | 96.9 | 7 |
| Comparative 1 | 2.00 | 0.1 | 20 | 176 | 7.3 | 21,900 | 96.6 | 6 |
| 2 | 2.00 | 0.1 | 20 | 173 | 6.4 | 25,000 | 97.5 | 8 |
| 3 | 2.00 | 0.1 | 20 | 182 | 5.4 | 29,600 | 97.5 | 6 |
| 4 | 2.00 | 0.1 | 20 | 189 | 5.8 | 27,600 | 97.8 | 4 |
| 5 | 1.20 | 0.062 | 20 | 225 | 5.4 | 29,600 |  | 7 |
| Comparative 5 | 1.20 | 0.062 | 20 | 157 |  | 20,600 |  |  |
| 6 | 0.20 | 0.01 | 20 | 124 | 11.4 | 14,000 | 95.4 | 6 |
| Comparative 6 | 0.20 | 0.01 | 20 | 69 | 18.8 | 8,500 | 95.6 | 7 |
| 7 | 1.0 | 0.1 | 10 | 225 | 6.1 | 26,200 | 97.6 | 5 |
| Comparative 7 | 1.0 | 0.1 | 10 | 151 | 8.1 | 19,800 | 97.5 | 1 |
| 8 | 0.62 | 0.062 | 10 | 158 | 6.0 | 26,700 | 97.5 | 4 |
| Comparative 8 | 0.62 | 0.062 | 10 | 96 | 8.9 | 18,000 | 96.3 | 7 |
| 9 | 0.4 | 0.062 | 6.45 | 180 | 7.2 | 22,200 | 98.1 | 3 |
| Comparative 9 | 0.4 | 0.062 | 6.45 | 133 | 8.9 | 18,000 | 97.6 | 3 |
| 10 | 2.0 | 1.67 | 1.2 | 186 | 6.5 | 24,600 | 97.9 | 5 |
| Comparative 10 | 2.0 | 1.67 | 1.2 | 138 | 9.6 | 16,700 | 97.9 | 5 |
| 11 | 0.6 | 0.5 | 1.2 | 173 | 6.6 | 24,200 | 97.3 | 5 |
| Comparative 11 | 0.6 | 0.5 | 1.2 | 97 | 10.3 | 15,500 | 96.1 | 3 |
| 12 | 0.4 | 0.33 | 1.2 | 164 | 8.9 | 18,000 | 97.8 | 5 |
| Comparative 12 | 0.4 | 0.33 | 1.2 | 100 |  | 12,700 |  |  |
| 13 | 0.2 | 0.17 | 1.2 | 26 | 43.2 | 3,700 |  |  |
| Comparative 13 | 0.2 | 0.17 | 1.2 | 26 | 44.2 | 3,600 |  |  |

The results of the foregoing Examples and Comparative Examples are summarized in Table 1.

EP 0 279 153 B1

## II. Short Residence Time Pre-Polymerization

In the second aspect of this invention applicants have found that through the use of a relatively short, small-gauge tubular reactor, catalyst systems of the type commonly employed in propylene production which typically are pre-polymerized under prolonged conditions, can be almost instantly pre-polymerized to provide a polymer yield equal to or greater than that achieved when the catalyst is pre-polymerized under the conventional prolonged conditions.

The drawing is a schematic illustration of the second aspect of the present invention showing the pre-polymerization system set up for the supply of pre-polymerized catalyst to a continuous flow-type polypropylene reactor. The continuous flow reactor 2 normally will take the form of a loop 4 equipped with an impeller 5. As will be understood by those skilled in the art the impeller 5 functions to circulate the polymerization reaction mass continuously through the loop at controlled temperature and pressure conditions.

A carrier stream for the pre-polymerization reactor is initially established by the supply of a suitable solvent for the organic catalyst components to a mixing line 8. The organic solvent, such as hexane or heptane, is supplied to the mixing line via line 9. TEAL and DPMS are supplied to the carrier fluid from suitable sources (not shown) via lines 11 and 12, respectively. After addition of the cocatalyst and electron donor, the titanium chloride base component is supplied to the carrier fluid via line 14. The catalyst may be supplied by any suitable procedure, either continuously or intermittently. The carrier fluid containing the catalyst components is then supplied to a tubular reactor 16 where it is mixed with liquid propylene supplied, for example, by a secondary line 18 leading from a main propylene supply line 19. The amount of propylene supplied to the pre-polymerization reactor 16 is relatively small in comparison to the amount of propylene supplied via the main supply line 19 to the polymerization reactor 2. The propylene supplied to the pre-polymerization reactor 16 and also the main reactor 2 normally will have small amounts of hydrogen entrained therein.

As noted previously, because of the perceived slow reaction time of the pre-polymerization reaction, the residence times of the propylene and catalyst components in prior art pre-polymerization reactors are normally on the order of minutes or even hours. Also the capacity of the pre-polmerization reactor in a commercial unit is fairly substantial, normally on the order of 200 liters or more In the present invention, the residence time of the reaction mixture within the pre-polymerization reactor 16 is less than a minute and, as a practical matter on the order of several seconds, and the volume capacity of the pre-polymerization reactor will be quite small, normally less than 1 liter. For most applications of the invention, the residence time within the pre-polymerization reactor is 10 seconds or less.

The drawing illustrates the preferred order of addition of the catalyst components to the carrier stream. That is, it is desirable that the titanium chloride catalyst be added to the carrier stream which already contains the cocatalyst and the electron donor compound. However, if desired, the electron donor can be added to the carrier stream after the addition of the titanium base catalyst component but still before the addition of the propylene. In a preferred embodiment, the cocatalyst should be present when the electron donor compound and the base catalyst component contact one another because it is believed that this avoids poisoning of the titanium catalyst.

In a specific embodiment of this aspect of the invention, the titanium tetrachloride base catalyst component is supplied to an elongated tubular pre-polymerization reactor of extremely low capacity which is operated at a residence time of 2 seconds or less.

In this embodiment, reaction chamber 16 is defined by a 7 foot long tubing having an internal diameter of 3/8 inch. The flow rate is adjusted to provide for a residence time within the tubing of 2 seconds or less.

## Experimental II

In experimental work carried out relative to this second aspect of the invention, polypropylene was produced with "raw" catalyst (no pre-polymerization), catalyst pre-polymerized by a batch-type procedure, and catalyst pre-polymerized in a tubular reactor. In each test the polymerization reaction was carried out in a two liter reactor at a temperature of 70°C and a polymerization time of 2 hours.

Two catalysts were employed in the experimental work and are identified herein as catalyst A and catalyst B. Both catalysts were commercially-available Ziegler-type catalysts in the form of titanium chloride on a magnesium chloride support. The ratio of titanium tetra chloride to magnesium chloride was slightly lower for catalyst A than for catalyst B. Catalyst A contained 19 wt. % magnesium and catalyst B about 16 wt % magnesium. In each test, TEAL and DPMS were employed as the cocatalyst and electron donor respectively. The propylene was charged to the 2 liter reactor in liquid form in an amount of about 1.4 liters.

In the experiments carried out with catalyst A without pre-polymerization, the reactor temperature was initially stabilized at 30°C and then charged with hydrogen followed by liquid propylene. The reactor temperature was brought to the reaction temperature at 70°C. The titanium chloride catalyst was charged to a 40 cc tubular reaction cylinder in a mineral oil slurry. TEAL and DPMS were mixed together and then added to the cylinder subsequent to the addition of the base catalyst component. After the addition of the TEAL-DPMS mixture, the catalyst system was flushed from the 40 cc cylinder to the 2 liter reactor. The polymerization reaction proceeded for the two-hour period at the reaction temperature of 70°C.

The catalyst A and B employed in the batch pre-polymerization test had been initially pretreated under pre-polymerization conditions. The pretreatment procedure generally followed addition of the titanium catalyst component to a vessel containing hexane, TEAL and DPMS. After agitation for a time sufficient to insure adequate contact between the catalyst, cocatalyst and electron donor, propylene was added in an amount to provide a weight ratio of propylene to catalyst within the range of 2-4. The pretreated catalyst was separated and washed with hexane or heptane to remove excess TEAL and then stored until used in the batch pre-polymerization procedure.

In the batch pre-polymerization test runs, TEAL and DPMS were added to a hexane solvent and thoroughly mixed for a period of 5 minutes. The titanium chloride catalyst component was added to the flask and the resulting mixture stirred for an additional 5 minutes. Gaseous propylene from a propylene tank in an amount to provide a weight ratio of propylene to titanium chloride catalyst within the range of 2-4 was passed through the flask for a period of 2 hours. The amount of propylene used in the pre-polymerization step was determined by weighing the propylene cylinder before and after the procedure. During the pre-polymerization procedure, the flask was maintained at a temperature of about 20-25°C.

Upon conclusion of the pre-polymerization procedure, the pre-polymerized catalyst was separated and washed with hexane. The pre-polymerized catalyst was stored at 0°F until used in the polymerization reaction.

The tubular pre-polymerization procedure was carried out in the 40 cubic centimeter cylindrical reaction chamber which had an internal diameter of about 2.5 cm. In the tubular pre-polymerization tests, the 2 liter reactor was initially charged with one half of the TEAL and DPMS mixture followed by hydrogen and most of the propylene used in the polymerization run, typically about 1.2 liters, was added to the two liter reactor. The remaining one half of the TEAL and DPMS mixture was added to the 40 cc tubular reaction cylinder. The solid titanium chloride base catalyst was then added to the 40 cc reaction cylinder. After a precontact time between the catalyst components of about 3 minutes, the reaction cylinder was filled with polypropylene and, after the desired pre-polymerization time, was flushed to the two liter reactor with liquid propylene at room temperature to add an additional 200 milliliters of propylene to the 2 liter reactor. The pre-polymerization time within the tubular cylinder ranged from about 2 to 10 seconds, as set forth in the following experimental data.

The reaction parameters and the results obtained in terms of catalyst efficiency, isotactic index, melt index, and bulk density are set forth below in Tables II and III. In the experimental work reported in Table II for catalyst A, the first two runs were carried out with raw catalyst (no pre-polymerization) and the next five runs were carried out under batch pre-polymerization procedure. The remaining runs Nos. 8-20 were carried out employing the tubular pre-polymerization procedure. The experimental work reported in Table III was carried out with catalyst B. Tests 15-27 involved pre-polymerizing the catalyst by batch procedures. The remaining runs 28-33 were carried out using the tubular pre-polymerization procedure described above. In Runs 1-7, 11-14 and 28-33, 15.6 millimoles of hydrogen were supplied to the polymerization reactor. In Runs 9-10, 17.8 millimoles of hydrogen were added, and in Runs 15-27, 65 millimeters of hydrogen gas were added.

In Tables II and III, the second column indicates the pre-polymerization residence time, where applicable, in seconds. The third and fourth columns set forth the amounts in millimoles of TEAL and DPMS used. The yield in grams of polypropylene is set forth in column 5 and the magnesium content in weight parts per million of the polypropylene is given in column 6. The catalyst efficiency in kilograms of polypropylene per gram of catalyst at the conclusion of the two hour polymerization period is set forth in column 7. The polypropylene product is characterized in columns 8-10. The wt. % of heptane insoluables found in the polypropylene is, of course, an indication of the isotactic index of the polymer. The melt flow index, as determined in accordance with ASTM testing spec D-1238-82, is set forth in column 10 and the bulk density of the polypropylene is given in the last column.

11

## TABLE II
## CATALYST A

| Run | Prepolym. Sec. | TEAL, mmol | DPMS, mmol | Yield, g | Mg, ppm | Eff. kg/g | Hept. Insol, wt% | M.I., g/10 min | Bulk Den. g/cc |
|---|---|---|---|---|---|---|---|---|---|
| 1 | none | 2 | 0.4 | 108 | 6.3 | 30 | 97 | 8 | 0.39 |
| 2 | none | 2 | 0.4 | 74 | 6.5 | 29 | 97 | 7 | 0.46 |
| 3 | Batch | 2 | 0.4 | 257 | 5.1 | 37 | 98 | 5 | 0.47 |
| 4 | Batch | 2 | 0.4 | 143 | 7.6 | 25 | 98 | 13 | 0.47 |
| 5 | Batch | 1 | 0.05 | 298 | 4.0 | 48 | 97 | | 0.44 |
| 6 | Batch | 1 | 0.05 | 250 | 4.4 | 43 | 96 | 11 | 0.41 |
| 7 | Batch | 1 | 0.05 | 197 | 4.3 | 44 | 97 | 8 | 0.43 |
| 8 | 10 | 2 | 0.4 | 403 | 5.4 | 35 | | | 0.47 |
| 9 | 10 | 2 | 0.4 | 316 | 5.2 | 37 | 99 | 9 | 0.51 |
| 10 | 10 | 2 | 0.4 | 311 | 5.3 | 36 | 99 | 7 | 0.53 |
| 11 | 10 | 2 | 0.2 | 154 | 4.6 | 41 | 97 | 9 | 0.49 |
| 12 | 2-3 | 2 | 0.4 | 145 | 4.5 | 42 | 97 | 7 | 0.44 |
| 13 | 10 | 2 | 0.05 | 400 | 4.3 | 44 | 92 | 15 | |
| 14 | 10 | 2 | 0.04 | 421 | 3.6 | 53 | 99 | 12 | |

EP 0 279 153 B1

TABLE III
CATALYST B

| Run | Prepolym. Sec. | TEAL, mmol | DPMS, mmol | Yield, g | Mg, ppm | Eff. kg/g | Hept. Insol, wt% | M.I., g/10 min | Bulk Den. g/cc |
|---|---|---|---|---|---|---|---|---|---|
| 15 | Batch | 2.00 | 0.1 | 234 | 5.6 | 29 | 96.9 | 7 | |
| 16 | Batch | 2.00 | 0.1 | 173 | 6.4 | 25 | 97.5 | 8 | |
| 17 | Batch | 2.00 | 0.1 | 182 | 5.4 | 30 | 97.5 | 6 | |
| 18 | Batch | 2.00 | 0.1 | 189 | 5.8 | 28 | 97.8 | 4 | |
| 19 | Batch | 1.20 | 0.062 | 225 | 5.4 | 30 | | 7 | |
| 20 | Batch | 0.20 | 0.01 | 124 | 11.4 | 14 | 95.4 | 6 | |
| 21 | Batch | 1.0 | 0.1 | 225 | 6.1 | 26 | 97.6 | 5 | |
| 22 | Batch | 0.62 | 0.062 | 158 | 6.0 | 27 | 97.5 | 4 | |
| 23 | Batch | 0.4 | 0.062 | 180 | 7.1 | 22 | 98.1 | 3 | |
| 24 | Batch | 2.0 | 1.67 | 186 | 6.5 | 25 | 97.9 | 5 | |
| 25 | Batch | 0.6 | 0.5 | 173 | 6.6 | 24 | 97.3 | 5 | |
| 26 | Batch | 0.4 | 0.33 | 164 | 8.9 | 18 | 97.8 | 5 | |
| 27 | Batch | 0.2 | 0.17 | 26 | 43.2 | 4 | | | |
| 28 | 5 | 2 | 0.4 | 144 | 6.0 | 27 | 99 | 8 | 0.48 |
| 29 | 5 | 2 | 0.2 | 156 | 6.2 | 26 | 98 | 7 | 0.48 |
| 30 | 5 | 2 | 0.1 | 149 | 6.1 | 26 | 98 | 7 | 0.48 |
| 31 | 5 | 2 | 0.05 | 148 | 6.2 | 26 | 98 | 7 | 0.46 |
| 32 | 5 | 2 | 0.04 | 158 | 6.4 | 25 | 97 | 6 | 0.46 |
| 33 | 5 | 2 | 0.03 | 148 | 7.3 | 22 | | 7 | |

Runs 1-14, which were all carried out with the same titanium chloride catalyst A permit a direct comparison to be made between the polymerization reaction carried out with raw catalyst and with catalyst pre-polymerized by a batch type and by the tubular pre-polymerization procedure. As would be expected the pre-polymerized catalysts in general give substantially higher activity than the raw catalysts. In addition, the' tubular type pre-polymerization procedure, with its relatively short pre-polymerization time, surprisingly

13

performed as well as, and in some cases, even better than the catalyst which was pre-polymerized in accordance with the batch type procedure.

The residence time within the pre-polymerization reactor is a function of the length of the reactor and the propylene flow rate through the pre-polymerization reactor. The amount of solid titanium chloride catalyst component introduced into the carrier stream and also the temperature at which the pre-polymerization reactor is operated influences the residence time which can be employed without plugging of the tubular reactor. Specifically an increase in temperature tends to shorten the permissible residence as does an increase in the amount of solid catalyst component added to the carrier stream. Table IV gives examples of residence times employed for a configuration of the type described previously in which the tubular reactor has an internal diameter of 3/8". In Table IV, the first column sets forth the volume in cubic centimeters of the titanium chloride catalyst during the residence time, the second the length of the reactor, the third the residence time, and the fourth the temperature in °F at which the reactor was operated. The last column indicates whether or not persistent plugging occurred under the stated conditions.

TABLE IV

| Cat. Vol. cc | Length feet | Residence Time sec. | T °F | Plugging |
|---|---|---|---|---|
| 2.5 | 7 | .5 | 60 | |
| 2.5 | 7 | 2 | 60 | |
| 1.3 | 20 | 1.8 | 60 | Yes |
| 1.3 | 7 | .5 | 60 | |
| 1.3 | 7 | .2 | 60 | |
| .7 | 7 | .2 | 60 | |
| 1.3 | 20 | 1 | 72 | |
| 1.3 | 7 | .75 | 80 | |

As noted previously, it is believed that particle size and bulk density of the final polymer product can be affected by the residence time within the pre-polymerization reactor. If it is desired to provide for a residence time greater than a few seconds under ambient temperature conditions, the diameter of the tubular reactor may be increased materially over that indicated above. For example, a reactor diameter of several centimeters, as in the case of the experimental data reported previously, may be employed. However, there is a particular advantage in using a relatively small diameter pre-polymerization reactor since it minimizes the chances of plugging occurring at the valved entry of the main reactor. For example, the invention can be carried out in a tubular reactor having an internal diameter of about 1 centimeter or less. Should plugging of the pre-polymerized feed result, it likely will occur in this case in the tubular reactor which can be easily removed and cleared.

As the pre-polymerized catalyst enters the main reactor, the weight ratio of polymer to the titanium chloride catalyst component may vary from 0.1 - 100. Preferably, the polymer/titanium chloride wt ratio is within the range of 2-10. The polypropylene pretreatment need not be substantially above that value and the amount of propylene fed to the tubular reactor relative to the amount of catalyst can be relatively small in relation to the amount of propylene used in prior art pre-polymerization procedures. More specifically, the weight ratio of propylene to titanium chloride catalyst supplied to the tubular reactor 16 can be 10 or less.

Having described specific embodiments of the two aspects of the present invention, it will be understood that modification thereof may be suggested to those skilled in the art, and it is intended to cover all such modifications as fall within the scope of the appended claims.

**Claims**

1. A. process for supplying a pretreated Ziegler-type catalyst to an olefin polymerization reactor, the steps comprising:
   (a) establishing a fluid carrier stream containing said catalyst;
   (b) adding olefin monomer to said carrier stream of (a);
   (c) flowing said carrier stream of (b) through an elongated tubular reactor at a flow rate sufficient to provide a residence time in said tubular reactor of less than about one minute under temperature conditions to pre-polymerize said catalyst by the polymerization of said monomer within said tubular reactor without plugging of said tubular reactor; and passing said carrier stream of (c) to the polymerization reactor.

2. The process of claim 1 wherein the residence time in said tubular reactor is no more than 10 seconds.

3. The process of claim 2 wherein said residence time is not more than 2 seconds.

4. The process of claim 1 wherein the volume of said tubular reactor is less than 1 liter.

5. The process of claim 1 wherein said tubular reactor has an internal diameter of no more than 1 centimeter.

6. The process of claim 1 wherein said olefin monomer is propylene.

7. The process of claim 6 wherein the residence time of said carrier stream within said tubular reactor after the addition of propylene monomer is no more than ten seconds.

8. The process of claim 7 wherein said tubular reactor is operated at a temperature no greater than 30°C.

9. The process of claim 6 wherein said Ziegler-type catalyst is used in conjunction with a cocatalyst and an electron donor entrained in said carrier stream at the time of the addition of the Ziegler-type catalyst.

10. The process of claim 6 wherein the weight ratio of propylene monomer to said Ziegler-type catalyst supplied to said tubular reactor is no more than 10.

11. A process for supplying a pretreated Ziegler-type catalyst to a continuous flow reactor for the polymerization of propylene in the liquid phase, the steps comprising:
    (a) establishing a fluid carrier stream composed of a liquid hydrocarbon solvent containing a cocatalyst for said Ziegler-type catalyst;
    (b) adding said Ziegler-type catalyst to said carrier stream of (a);
    (c) adding liquid propylene to said carrier stream of (b);
    (d) flowing said carrier stream of (c) through an elongated tubular reactor at a flow rate sufficient to provide a residence time in said tubular reactor of less than one minute and under temperature conditions to pre-polymerize said catalyst by the polymerization of said liquid propylene within said reactor without plugging said tubular reactor; and
    (e) passing said carrier stream of (d) to said continuous reactor.

12. The process of claim 11 wherein an electron donor compound is incorporated into said carrier stream prior to the incorporation of said propylene and wherein said cocatalyst is present upon contact of said Ziegler-type catalyst and said electron donor.

13. The process of claim 11 wherein the weight ratio of said propylene to said Ziegler-type catalyst supplied to said tubular reactor is within the range of 2-10.

14. The process of claim 11 wherein the residence time in said tubular reactor is no more than 10 seconds.

15. The process of claim 14 wherein said residence time is no more than 2 seconds.

16. The process of claim 11 wherein the volume of said tubular reactor is less than 1 liter.

**Patentansprüche**

1. Verfahren zum Zuführen eines vorbehandelten Katalysators vom Ziegler-Typ zu einem Reaktor zum Polymerisieren von Olefin, umfassend die Stufen:
    (a) Einrichten eines den Katalysator enthaltenden Strömungsmittel-Trägerstroms;
    (b) Hinzufügen von Olefinmonomer zu dem Trägerstrom von (a);
    (c) Hindurchführen des Trägerstromes von (b) durch einen langgestreckten rohrförmigen Reaktor mit einer Strömungsrate, die genügt, eine Aufenthaltszeit in dem rohrförmigen Reaktor von weniger als etwa einer Minute unter Temperaturbedingungen zu schaffen, bei denen der Katalysator durch die Polymerisation des genannten Monomers innerhalb des rohrförmigen Reaktors vorpolymerisiert wird, ohne den genannten rohrförmign Reaktor zu verstopfen, und Überführen des genannten Trägerstromes von (c) zum Polymerisationsreaktor.

2. Verfahren nach Anspruch 1, worin die Aufenthaltszeit in dem rohrförmigen Reaktor nicht mehr als zehn Sekunden beträgt.

3. Verfahren nach Anspruch 2, worin die Aufenthaltszeit nicht mehr als zwei Sekunden beträgt.

4. Verfahren nach Anspruch 1, worin das Volumen des rohrförmigen Reaktors kleiner als ein Liter ist.

5. Verfahren nach Anspruch 1, worin der rohrförmige Reaktor einen Innendurchmesser von nicht mehr als einen Zentimeter hat.

6. Verfahren nach Anspruch 1, worin das Olefinpolymer Propylen ist.

7. Verfahren nach Anspruch 6, worin die Aufenthaltszeit des Trägerstromes innerhalb des rohrförmigen Reaktors nach der Zugabe von Propylenmonomer nicht mehr als zehn Sekunden beträgt.

8. Verfahren nach Anspruch 7, worin der rohrförmige Reaktor bei einer Temperatur von nicht mehr als 30°C betrieben wird.

9. Verfahren nach Anspruch 6, worin der Katalysator vom Ziegler-Typ in Verbindung mit einem Kokatalysator und einem Elektronenspender benutzt wird, die zur Zeit der Zugabe des Katalysators vom Ziegler-Typ in dem Trägerstrom mitgeführt werden.

10. Verfahren nach Anspruch 6, worin das Gewichtsverhältnis des Propylenmonomers zum Katalysator vom Ziegler-Typ, die dem rohrförmigen Reaktor zugeführt werden, nicht größer als zehn ist.

11. Verfahren zum Zuführen eines vorbehandelten Katalysators vom Ziegler-Typ zu einem kontinuierlichen bzw. Durchlaufreaktor zur Polymerisation von Propylen in der flüssigen Phase, umfassend die Stufen:
   (a) Einrichten eines Strömungsmittel-Trägerstromes, zusammengesetzt aus einem flüssigen Kohlenwasserstoff-Lösungsmittel, das einen Kokatalysator für den Katalysator vom Ziegler-Typ enthält;
   (b) Zugeben des Katalysators vom Ziegler-Typ zu dem Trägerstrom von (a);
   (c) Zugeben von flüssigem Propylen zu dem Trägerstrom von (b);
   (d) Hindurchführen des Trägerstromes von (c) durch einen langgestreckten rohrförmigen Reaktor mit einer Strömungsrate, die genügt, eine Aufenthaltszeit in dem rohrförmigen Reaktor von weniger als einer Minute und unter Temperaturbedingungen zu ergeben, bei denen der Katalysator durch die Polymerisation des flüssigen Propylens innerhalb des genannten Reaktors ohne Verstopfen des rohrförmigen Reaktors vorpolymerisiert wird, und
   (e) Überführen des Trägerstromes von (d) zu dem kontinuierlichen Reaktor.

12. Verfahren nach Anspruch 11, worin eine Elektronenspender-Verbindung vor dem Einführen des Propylens in den Trägerstrom eingeführt wird und worin beim Kontakt des Katalysators vom Ziegler-Typ und des Elektronenspenders der Kokatalysator vorhanden ist.

13. Verfahren nach Anspruch 11, worin das Gewichtsverhältnis des Propylens zum Katalysator vom Ziegler-Typ, die dem rohrförmigen Reaktor zugeführt werden, innerhalb des Bereiches von zwei bis zehn liegt.

14. Verfahren nach Anspruch 11, worin die Aufenthaltszeit in dem rohrförmigen Reaktor nicht mehr als zehn Sekunden beträgt.

15. Verfahren nach Anspruch 14, worin die Aufenthaltszeit nicht mehr als zwei Sekunden beträgt.

16. Verfahren nach Anspruch 11, worin das Volumen des rohrförigen Reaktors kleiner als ein Liter ist.

EP 0 279 153 B1

**Revendications**

1. Procédé pour alimenter un réacteur de polymérisation d'oléfines en catalyseur prétraité du type Ziegler, les étapes comprenant le fait de :
   (a) établir un courant de transport de fluide contenant ledit catalyseur;
   (b) ajouter un monomère d'oléfine audit courant de transport de (a);
   (c) faire couler ledit courant de transport de (b) à travers un réacteur tubulaire allongé à un débit suffisant pour procurer un temps de séjour dans ledit réacteur tubulaire inférieur à environ une minute dans des conditions de température pour prépolymériser ledit catalyseur par la polymérisation dudit monomère dans ledit réacteur tubulaire sans boucher ledit réacteur tubulaire; et
   (d) faire passer ledit courant de transport de (c) au réacteur de polymérisation.

2. Procédé selon la revendication 1, dans lequel le temps de séjour dans ledit réacteur tubulaire ne dépasse pas 10 secondes.

3. Procédé selon la revendication 2, dans lequel ledit temps de séjour ne dépasse pas 2 secondes.

4. Procédé selon la revendication 1, dans lequel le volume dudit réacteur tubulaire est inférieur à 1 litre.

5. Procédé selon la revendication 1, dans lequel ledit réacteur tubulaire a un diamètre interne qui n'est pas supérieur à 1 centimètre.

6. Procédé selon la revendication 1, dans lequel ledit monomère d'oléfine est du propylène.

7. Procédé selon la revendication 6, dans lequel le temps de séjour dudit courant de transport à l'intérieur dudit réacteur tubulaire après l'addition du monomère de propylène n'est pas supérieur à 10 secondes.

8. Procédé selon la revendication 7, dans lequel ledit réacteur tubulaire est mis en service à une température qui ne dépasse pas 30°C.

9. Procédé selon la revendication 6, dans lequel on utilise ledit catalyseur de type Ziegler conjointement avec un cocatalyseur et un donneur d'électrons entraînés dans ledit courant de transport au moment de l'addition de catalyseur de type Ziegler.

10. Procédé selon la revendication 6, dans lequel le rapport pondéral entre le monomère de propylène et ledit catalyseur de type Ziegler, qui alimente le réacteur tubulaire, n'est pas supérieur à 10.

11. Procédé pour alimenter un réacteur à écoulement continu en catalyseur prétraité de type Ziegler pour la polymérisation de propylène en phase liquide, les étapes comprenant le fait de
    (a) établir un courant de transport de fluide composé d'un solvant d'hydrocarbure liquide contenant un cocatalyseur pour ledit catalyseur de type Ziegler;
    (b) ajouter ledit catalyseur de type Ziegler audit courant de transport de (a);
    (c) ajouter du propylène liquide audit courant de transport de (b);
    (d) faire couler ledit courant de transport de (c) à travers un réacteur tubulaire allongé à un débit suffisant pour procurer un temps de séjour dans ledit réacteur tubulaire inférieur à environ une minute et dans des conditions de température pour prépolymériser ledit catalyseur par la polymérisation dudit propylène liquide dans ledit réacteur tubulaire sans boucher ledit réacteur tubulaire; et
    (e) faire passer ledit courant de transport de (d) audit réacteur en continu.

12. Procédé selon la revendication 11, dans lequel on incorpore un composé donneur d'électrons dans ledit courant de transport avant l'incorporation dudit propylène, et dans lequel ledit cocatalyseur est présent lors du contact entre ledit catalyseur de type Ziegler et ledit donneur d'électrons.

13. Procédé selon la revendication 11, dans lequel le rapport pondéral entre ledit propylène et ledit catalyseur de type Ziegler qui alimente ledit réacteur tubulaire se situe dans le domaine de 2 à 10.

14. Procédé selon la revendication 11, dans lequel le temps de séjour dans ledit réacteur tubulaire ne dépasse pas 10 secondes.

17

**15.** Procédé selon la revendication 14, dans lequel ledit temps de séjour ne dépasse pas 2 secondes.

**16.** Procédé selon la revendication 11, dans lequel le volume dudit réacteur tubulaire est inférieur à 1 litre.